# EUROPEAN PATENT APPLICATION

(11) **EP 1 873 573 A1**
(43) Date of publication of application: **02.01.2008**
(21) Application number: 07252596.7
(22) Date of filing: 26.06.2007
(51) Int. Cl.: G02B 27/28, G02B 5/30

(54) **Polarization recovery plate**

(30) Priority: 28.06.2006 US 806022 P
(71) Applicant: JDS Uniphase Corporation, Milpitas CA 95035 (US)
(72) Inventor: Newell, Michael, California 95405 (US); Pradhan, Apurba, California 94105 (US); McKenzie, Paul, California 95409 (US)
(74) Representative: McKechnie, Neil Henry

(57) **Abstract**

The invention relates to a polarization recovery device which PBS plate having an embedded Mac-Neille type multilayer polarization splitting structure, a reflective back surface and a front surface shaped as a saw-tooth grating for providing normal incidence for beams entering and exiting the plate at the Brewster angle to the polarization splitting structure, when the reflective PBS plate is positioned at an oblique angle to input unpolarized light so as to output spatially separated polarized beams in a same direction through the front surface.

## Description

### CROSS-REFERENCE TO RELATED APPLICATIONS

The present invention claims priority from United States Provisional Patent Application No. 60/806,022 filed June 28th, 2006, entitled "Polarization Recovery Plate", which is incorporated herein by reference.

### TECHNICAL FIELD

The present invention generally relates to optical devices for producing polarized radiation from unpolarized radiation, and in particular to a polarization recovery plate for a color projection display.

### BACKGROUND OF THE INVENTION

Polarized light is used in various applications, prominent examples of which include projection systems using liquid crystal displays (LCDs) as spatial light modulators (SLM). Although the LCDs function by modulating the polarization of incident light, an illumination system of a typical LCD projector utilizes a source of unpolarized or insufficiently polarized light such as an arc lamp or light emitting diodes (LEDs), and therefore requires a device that would convert the unpolarized light into polarized light.

The term "polarized light" refers to a beam of light generally having a single, in the context of LCD projectors typically linear, or planar, polarization defined by similarly oriented electromagnetic waves. A natural beam of light such as emitted by an are lamp, on the other hand, is generally unpolarized, or has a number of planes of polarization defined by the electromagnetic waves emitted by the light source. This natural, or unpolarized, light may be described as being composed of two orthogonal, for example linear (plane) polarizations, which in the context of a given reference plane are commonly referred to as S-polarization and P-polarization.

A polarizer can be added to the illumination system to filter the light, so as to provide a polarized beam to the SLM. however this method has an associated loss of 50% of the light, as one polarization state is absorbed or otherwise lost.

Illumination systems utilizing polarisation recovery techniques seek to take this lost light and convert it to the desired polarization state so it can be recovered and utilized, thus increasing the efficiency of the system and hence the brightness of projection. Prior art methods of performing this polarization recovery and conversion include the use of lenslet arrays and a polarization conversion array (PCA) as disclosed for example in U.S. Pat. No. 6,139,157, which tend to increase the size and cost of the projector, or the use of a polarization converting light pipe (PCLP). The PCLP tends to be a lower cost system than the aforementioned lenslet array PCA, but suffers from lower contrast, approximately 6:1 emerging from a typical PCLP as compared with the 20 to 30:1 from the lenslet array PCA, and lower efficiency; about 72% compared with approximately 80%.

In a typical polarization recovery system, unpolarized light is decomposed into co-propagating but spatially separated S-polarized beam and a P-polarized beam using a polarizing beam splitter (PBS), and the polarization of one of the orthogonally polarized beams is rotated by 90 degrees so as to provide two equally polarized beams, which are then combined to provide a uniformly and singularly polarized beam.

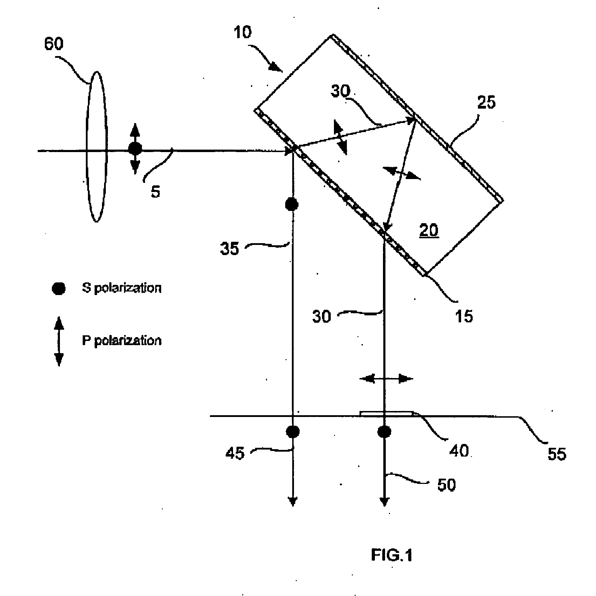

FIG. 1 illustrates one known type of a polarization conversion device, which utilizes a polarization beam conversion (PBC) plate 10, which is described for example in US Patent Application 2005/0231690 assigned to the assignee of the current application. The PBC 10 is positioned at 45 degrees to an input unpolarized light 5, and has a wire-grid polarizer (WGP) 15 at a front surface which splits the input light 5 into P-polarized and S-polarized beams 30 and 35, with the S-polarized beam 35 being reflected and the P-polarized beam being transmitted by the wire-grid polarizer towards a back surface of the PBC plate 10. A mirror 25 located at the back surface reflects the P-polarized light 30, which exits the PBC plate 10 propagating in the same direction as the 5-polarized beam 30, but spatially separately therefrom at an image plane 55 of an input lens 60. At this image plane 55, a half-wave plate 40, which is patterned to match the spatial separation of S- and P-polarized light, is used to convert one of the polarization states into the other, thus maximizing the amount of light in the usable polarization state. The PBC plate 10 incorporating a wire grid polarizer is effective over a wide spectral region and a wide range of angles. However, because of the difficulty of making large wire grids of very small spacings, such a device tends to be expensive. Other drawbacks of the wire-grid based PBC 10 include additional light reflection and scatter typically associated with the wire grids, which may negatively affect light transmission efficiency, and the need to use a high degree of caution in handling WGPs, since they are difficult to clean.

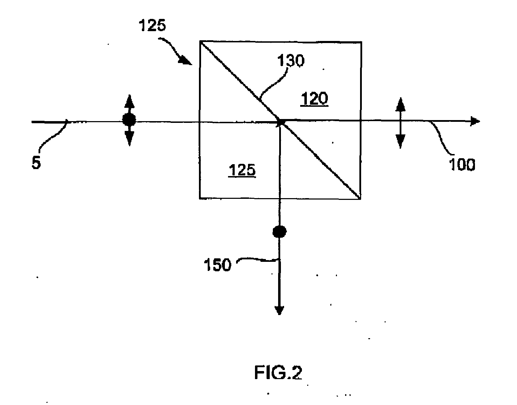

An alternative to using a wire-grid polarizer would be to use a MacNeille type PBS coating. Polarizating properties of a MacNeille type polarizer is based on the Brewster's effect in which light striking the surface of glass or another medium at the Brewster's angle is converted into two polarized beams, one transmitted and the other reflected. This type of coating, first described in U.S. PaL No. 2,403,731 issued to MacNeille, requires that the unpolarized light is incident upon the coating surfaces at the Brewster's angle for the coating materials used. If the unpolarized light is incident upon the coating from the air, the Brewster's angle exceeds the critical angle at the glass-air interface. For this reason, a MacNeille type PBS typically utilizes 45 degree glass prisms as the incident/exit medium for such coatings forming a cube as illustrated in FIG.2, so that light enters a leg of a first prism 125 at a right angle and is incident on the coating 130 on the prism hypotenuse at 45 degrees so as to meet the Brewster's condition. As described in US Patent 2,403,731 and other more recent prior art publications, the polarizing coating 130 consists of a plurality of layers which can be designed so as to broaden the acceptance angle range for this type of polarizer within a pre-defined spectral range, with the polarization extinction ratio typically proportional to the number of layers in the coating. The input unpolarized light 5 is split by the coating 130, so that a P-polarized beam 100 is transmitted through the PBS cube 105, while an orthogonally S-polarized beam 150 is reflected and leaves the PBS cube 105 through a second leg of the first prism 125 propagating in a different direction.. A mirror placed after the cube 120 parallel to the coating 130 would re-direct the P-polarized beam 100 to propagate in the same direction as the S-polarized beam 150, so that a polarization rotator such as a half wave plate 40 can again be used to align the polarization of both polarized beams; an example of such a system is disclosed in US Patent 6,046,856. However, the addition of a mirror after the cube prism 125 ads complexity to the system resulting in a system which is disadvantageously bulky, requires an additional alignment step thereby increasing the manufacturing cost, and may lead to additional loss of light thereby making the system less efficient.

Accordingly, there exists a current need for a simple, low cost, and compact polarization recovery system that operates with high efficiency.

An object of the present invention is to provide a simple low cost polarization recovery plate for converting unpolarized light into substantially polarized light for use in a projection display system.

### SUMMARY OF THE INVENTION

In accordance with the invention, a polarization recovery device is provided comprising a plate of optically transparent material or materials having a grating shaped front surface for receiving unpolarized light and a reflective back surface for reflecting light incident thereupon. The plate comprises a polarization splitting structure for receiving the unpolarized light at an oblique angle so as to transmit P-polarized light towards the reflective back surface and to reflect S-polarized light towards the front surface, wherein the P-polarized light is reflected from the reflecting back surface towards the front surface in a direction parallel to the S-polarized light.

The front surface comprises a saw tooth grating formed by an array of grating teeth, each grating tooth having a first side for receiving the unpolarized light and a second side for transmitting one of the S-polarized light and the P-polarized light to form spatially separated S-polarized P-polarized beams propagating in a same direction.

In accordance with one aspect of this invention, the pre-defined oblique angle is the Brewster angle, and the embedded polarization splitting structure is a Mac-Neille type multilayer structure comprising a plurality of layers with alternating high and low refractive indexes.

Another feature of the present invention provides a polarization converter disposed in an optical path of one of the P-poltUized beam and S-polarized beam for converting thereof into a beam of orthogonal polarization, so as to form two beams of a substantially same polarization propagating in the same direction.

### BRIEF DESCRIPTION OF THE DRAWINGS

The invention will be described in greater detail with reference to the accompanying drawings representing preferred embodiments thereof, in which like elements are labeled with like numerals, wherein:

FIG. 1 is a diagram illustrating a prior art polarization recovery system with a PBS plate utilizing a wire grid polarizer;

FIG. 2 is a diagram illustrating a prior art MacNeille PBS cube;

FIG. 3A is a diagram illustrating a cross-sectional view of a polarization recovery device utilizing a reflective PBS plate of the current invention;

FIG. 3B is a zoomed-in cross-sectional view of a front portion of the reflective PBS plate shown in FIG. 3A illustrating the saw tooth grating at the front surface thereof;

FIG. 3C is a schematic diagram illustrating a perspective view of the first substrate of the reflective PBS plate shown in FIG. 3A illustrating triangular prisms forming the saw tooth grating at the front surface thereof;

FIG.4 is a schematic diagram illustrating cross-sectional view of the reflective PBS plate of the present invention in operation;

FIG. 5 is a schematic diagram providing a cross-sectional view of the first substrate of the reflective PBS plate of the present invention with an etched saw tooth grating.

FIG. 6 is a schematic diagram providing a cxoss-sectional view of the first substrate of the reflective PBS plate of the present invention with an embossed saw tooth grating.

### DETAILED DESCRIPTION

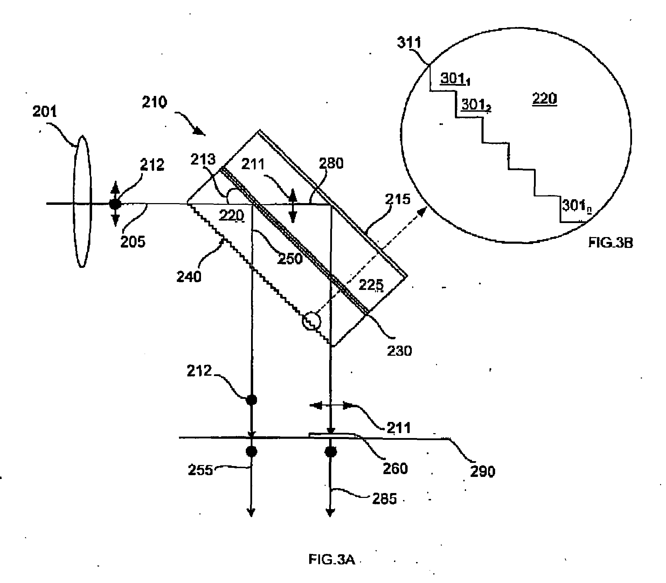

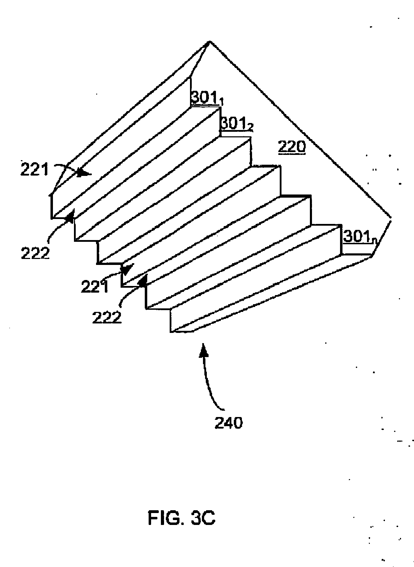

A preferred embodiment of a polarization recovery device of the current invention is shown in FIG. 3A and is hereafter described.

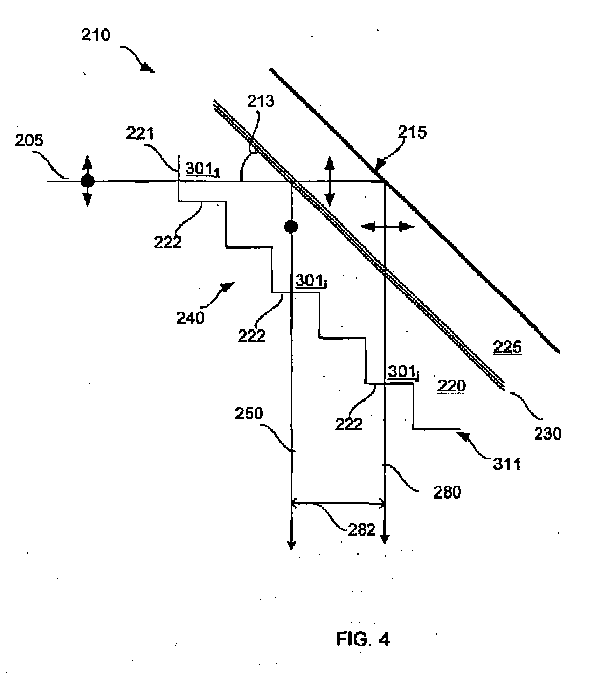

A plate 210 of optically transparent material or materials has a front surface 240 for receiving unpolarized light 205, a reflecting back surface 215, and a polarization splitting structure 230 embedded into the plate 210 generally in parallel with the reflecting back surface 215. The polarization splitting structure 230 is designed for splitting unpolarized light incident thereupon at a pre-defined oblique angle 213 according to it polarization, so as to transmit P-polarized light 280 towards the reflective back surface 215 and to reflect S-polarized light 250 towards the front surface 240. As used herein, the S- and P-poLarizations refer to the direction of polarization of light with respect to the plain of incidence of the unpolarized light 205 upon the plate 210, with the S-polarized light having its polarization direction normal to the plane of incidence and parallel to the front surface 240, and P-polarized light having its polarization direction lying in the plane of incidence, which corresponds to the plane of FIG.3A. The S- and P-polarized light is shown in FIG.3A and 4 as rays labeled with dark circles 212 and double-side arrows 211, respectively. The plate 210 will also be referred to herein as the reflective PBS (polarization beam splitting) plate, or the (reflective) polarization conversion plate 210.

In a preferred embodiment, the polarization splitting structure 230 is a multilayer interference structure which consists of a plurality of dielectric layers with alternating high and low refractive indexes so as to direct the reflected S-polarized light 212 in the desired direction through interference and to provide the desired polarization splitting properties. Design principles of such a structure are well known in the art and will not be described herein; details can be found, for example, in U.S. Patents No 2,403,731, No 5,658,060 and No 5,798,819. In a preferred embodiment, the plate 210 is formed by bonding together two transparent substrates 220 and 225 with the polarization splitting multilayer structure 230 sandwiched therebetween, similarly as the MacNeille polarizing interference structure is sandwiched between two triangular prisms in a MacNeille cube prism. By way of example, the MacNeille-type thin film coatings can be deposited upon a first surface of the second substrate 225 to form the polarization splitting structure 230, and then bonded to the first substrate 220. Also by way of example, the substrates 220 and 225 are glass substrates. In other embodiments they can be made of other optically transparent material or materials such as suitable plastic, silica, doped silica etc.

According to the current invention, the front surface 240, which in operation receives the unpolarized light 205, is not flat but is shaped to form a saw tooth grating 311; this grating is illustrated in FIG.3B providing a zoomed-in cross-sectional view of a portion of the front surface 240, and in FIG3C providing a schematic perspective view of the saw tooth grating 311 at the front surface 240 of the first substrate 220. The saw-tooth grating 311 is formed by an array of grating teeth 301₁-301ₙ, hereinafter generally referred to as grating teeth 301, each having a shape of a triangular prism with a right angle unilateral triangle in the cross-section. The grating teeth have a first side or face 221 for receiving the unpolarized light 205, and a second side or face 222 preferably oriented at 90 degrees to the first side 221 for transmitting one of the P-polarized light 280 and S-polarized light 250, as described hereinbelow. Preferably, the shape and the orientation of the teeth 301 is selected so as to provide normal incidence for beams entering and exiting the reflective PBS plate 210, when said beams propagate at the Brewster angle to the polarization splitting structure 230, such as beams 205, 250, and 280 in FIG. 3A.

Turning now to FIG. 4, a portion of the plate 210 is schematically shown to illustrate the device operation. In this figure, the grating teeth 301 are shown intentionally increased in size relative to the rest of the structure for illustration purposes, so that the shown dimensions are not to scale; in different embodiments of the invention, dimensions of the grating teeth 301 relative to the rest of the plate 10 are preferably smaller than shown in FIG.4. but can also be as large or larger than shown in FIG. 4, depending on requirements of a particular application as would be clear to those skilled in the art

In operation, the plate 210 is oriented at substantially 45 degrees to the input non-polarized light 205 so that the non-polarized light 205 impinges upon the plate 210 normally to the first side 221 of one or more of the grating teeth 301. Accordingly, the non-polarized light 205 enters the first substrate 220 without substantially changing its direction, and is received by the polarization splitting multilayer structure 230 at the pre-defined oblique angle 213 θ, which is preferably equal to 45 degrees. The polarization splitting multilayer structure 230 is such that the oblique angle 213 is the Brewster angle for light incident thereupon from within the substrate 220. and such that it splits the unpolarized light 205 incident thereupon in two linearly polarized components, which are the S-polarized light 250 and the P-polarized light 280. The S-palarized light 250 is reflected by the polarization splitting structure 230 back into the first substrate 220 towards the front surface 240, at substantially 90 degrees to the direction of incidence. The P-polarized light 280 is transmitted by the polarization splitting structure 230 into the second substrate 225 towards the reflecting back surface 215, whereupon it is reflected at 90 degrees angle to the direction of incidence back into the plate 210 towards the polarization splitting structure 230. The reflecting back surface 215 can utilize the total internal reflection effect to reflect the P-polarized light 280, or the second substrate 225 can be coated with additional reflecting, for example metal, coating or coatings to form the reflecting back surface 215. In some embodiments, the front surface 240 can have antireflection coatings applied thereupon.

After reflecting from the back surface 215, the P-polarized beam 280 is transmitted through the polarization splitting structure 230 towards the front surface 240 in the same direction as the S-polarized beam 250, but with a lateral offset *d* = *al*cos(θ) schematically shown at 282; the lateral offset *d* depends on a thickness a of the second substrate 225, and the angle of incidence θ shown at 213.

The S-polarized light 250 reflected from the polarization splitting structure 230, and the P-polarized light 280 reflected from the back surface 215 are then transmitted through the second side 222 of different grating teeth 301ᵢ and 301ⱼ, respectively, and at the output of the plate 210 form two orthogonally-polarized output beams propagating out of the plate 210 in a same general direction at substantially 90 degrees to the direction of the unpolarized light 205.

Note that the unpolarized light 205 is illustrated in FIGs. 3A and 4 by way of a single representative ray entering the plate 210 though a single grating tooth, the tooth 341 in FIG.4 by way of example. However, one skilled in the art will appreciate that in reality the unpolarized light 205 is a suitably narrow-cone optical beam that enters the plate 210 through a plurality of grating teeth 301 at a plurality of angles of incidence within a pre-defined suitably narrow range about the normal incidence, and is therefore incident upon the polarization splitting structure 230 also at a plurality of oblique angles in a certain range of angles of incidence about the oblique angle 213, which by way of example may correspond to f/5, or +\-6 degrees. Accordingly, the layers of the polarization splitting structure 230 are designed so as to provide the desired polarization splitting properties within the range of angles of incidence corresponding to the divergence of the an polarized light 205 and within a pre-defined wavelength range, as is known in the art.

Similarly, the S-polarized light 250 and the P-polarized light 280 are beams of light having each a finite physical aperture and divergence within the plate 210 and at the output thereof determined by the physical aperture and divergence of the unpolarized beam 205, and exit the front surface 240 of the plate 210 through different regions thereof, which may each encompass a plurality of grating teeth 301 and may or may not overlap.

Turning back to FIG. 3A, a lens 201 can be used to focus or collimate the unpolarized light 205 to decrease its divergence and ensure good polarization splitting for all its useful spectral components as defined by a particular application. The thickness a of the second substrate 225 is selected so that the S-polarized light 250 and the P-popularized light 280 are spatially separated in an image plane 290 outside of the plate 210. In one embodiment, a polarization converting element 260. such as a half wave plate, is disposed in an optical path of the P-polarized light 280 so as to rotate its polarization by 90 degrees and convert it into S-polarized light 285 without affecting the S-polarized light 250; this results in two co-propagating beams 250 and 285 of substantially the same S-polarization propagating in the same direction Alternatively, the polarization converting element 260 can be placed in an optical path of the S-polarized beam 250 so as not to affect the la-polarized beam 280, resulting in two P-polarized beams propagating in the same direction.

By way of example, the lens 201 is such that the unpolarized light 205 is substantially collimated and has a physical aperture of 1.0 mm at the front surface of the plate 210; the S- and P-polarized light 250 and 280 will also have then a physical aperture of about 10 mm. Utilizing the second substrate which is at least a = 10 mm * cos(θ) = 10/√2 ≈ 7.1 mm thick or thicker will enable to spatially separate the S-polarized beam 250 from the P-polarized beam 280 at the output of the plate 210.

Advantageously, the reflective polarization conversion plate 210 having the front surface shaped as a saw tooth grating and the embedded multilayer polarization splitting structure 230 combines useful features of the prior art reflective wire-grid polarizer 10 shown in FIG. 1 and the MacNeille cube prism: it has the compactness of the reflective wire-grid polarizer 10, but is considerably less expensive as it does not require the fabrication of the wire grid and can be produced using well establish technology similar to that used in fabrication of MacNeille cube prisms. As a further advantage, the reflective PBS plate 210 of the present invention is more tolerant to handling than a WGP-based device, since it can be more easily cleaned if required.

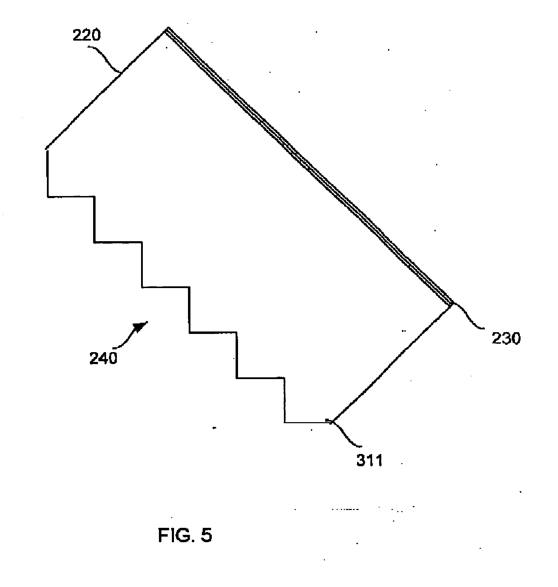

As one skilled in the art will appreciate, the saw tooth grating 311 at the front surface of plate 210 can be formed in a variety of ways. In one embodiment, it can be etched directly in the surface of the first substrate 220 using known etching technologies, resulting in the first substrate having a structure as illustrated in FIG. 5, wherein the multilayer polarization structure 230 is shown applied to the other side of the first substrate 230, for example by coating, vapor deposition or the like.

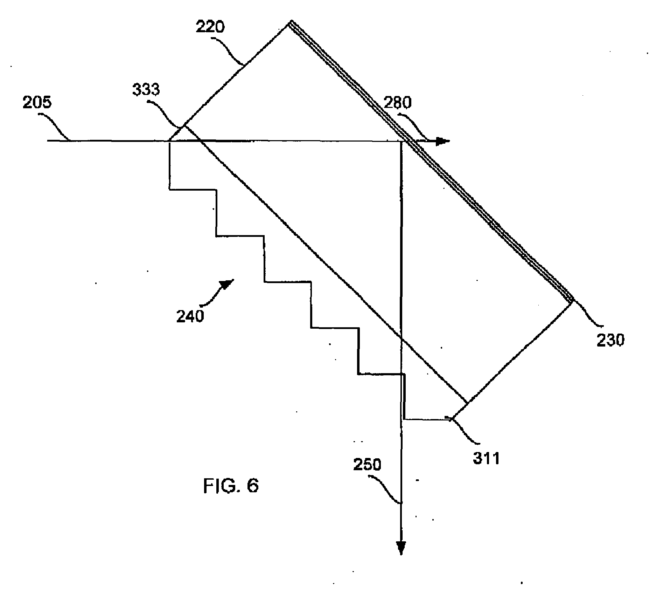

In another embodiment illustrated in FIG. 6, the saw, tooth grating 311 is embossed in a film 333 which is then bonded to the substrate 220. In this embodiment, operation of the plate 210 is substantially as described hereinabove with reference to FIGS. 3A and 4, provided that the refractive index *n*_{f} of the embossed film 333 is substantially equal to the refractive index *n*₁ of the first substrate 220.

Preferred dimensions of the plate 210 and the choice of materials depend on a particular application and fabrication technology. For example, the thickness of substrate 220 is preferably suitably small so as to decrease the overall size and weight of the plate 210, while ensuring ease of fabrication and handling. In one embodiment, the embossed film 333 can be bonded directly to the polarization splitting multilayer structure 230 coated on the second substrate 225, with the embossed film 333 playing the role of the first substrate 220. Generally, the term "substrate" is used herein to mean any single layer or multilayer structure capable of performing functions described hereinabove with reference to the elements 220 and 225. The overall in-plane dimensions of the plate 210 and the thickness of the second substrate 225 depend on the beam aperture of the unpolarized light 205 and the target separation of the output S-polarized and P-polarized beams 250.

The size of individual saw grating teeth 301, or the grating pitch, may be selected between about 5mm and about 10 microns depending on fabrication technology and its ability to provide sharp well-define corner prisms without undesirable roll-off.. For example, for embossed grating fabricated as a replicated surface of a film or using a roll-to-roll type of film fabrication method, the pitch of the saw tooth grating 311 can be between 50 and 500 microns, so as to avoid corner roll-offs. In another embodiment, the saw tooth grating 311 can be fabricated by injection or compression molding, similarly to the technology used to produce Fresnel lenses for projection TVs, with the pitch size between about 200 microns and 5mm. Another possibility is to fabricate the saw tooth grating 311 by etching. This may enable the fabrication of well-defined teeth with the pitch as small as 10 microns or less.

The substrates 220 and 225 are preferably glass substrates, but can also be made of other optically transparent materials as would be known to those skilled in the art.

Of course numerous other embodiments may be envisioned without departing from the spirit and scope of the invention.

## Claims

1. A polarization recovery device comprising:
a plate of optically transparent material or materials having a front surface for receiving unpolarized light and a reflective back surface for reflecting light incident thereupon, the plate comprising
a polarization splitting structure for receiving the unpolarized light at an oblique angle so as to transmit P-polarized light towards the reflective back surface and to reflect S-polarized light towards the front surface;
wherein the P-polarized light is reflected from the reflecting back surface towards the front surface in a direction parallel to the S-polarized light;
and wherein the front surface comprises a saw tooth grating formed by an array of grating teeth, each grating tooth having a first side for receiving the unpolarized light and a second side for transmitting one of the S-polarized light and the P-polarized light to form spatially separated S-polarized P-polarized beams propagating in a same direction.

2. A polarization recovery device of claim 1 wherein the oblique angle is the Brewster angle.

3. A polarization recovery device of claim 2 wherein the embedded polarization splitting structure comprises a plurality of layers with alternating high and low refractive indexes.

4. A polarization recovery device of claim 3 wherein the embedded polarization splitting structure forms a MacNeille type polarizer.

5. A polarization recovery device of claim 3 wherein the embedded polarization splitting Structure is sandwiched between first and second optically transparent substrates.

6. A polarization recovery device of claim 2 wherein the oblique angle is equal to substantially 45 degrees.

7. A polarization recovery device of claim 2 wherein each grating tooth has a shape of a right angle equilateral triangular prism so that the first side is substantially equal to the second side and forms a 90 degrees angle therewith.

8. A polarization recovery device of claim 1 wherein the saw tooth grating is etched into the front surface.

9. A polarization recovery device of claim 1 wherein the saw tooth grating is formed by an embossed layer on the plate.

10. A polarization recovery device of claim 4 wherein the first and second substrates are glass substrates.

11. A polarization recovery device of claim 1 wherein the reflective back surface is for reflecting the P-polarized light by means of total internal reflection.

12. A polarization recovery device of claim 1 wherein the reflective back surface comprises a reflecting coating.

13. A polarization recovery device of claim 1 further comprising a polarization converter disposed in an optical path of one of the P-polarized beam and S-polarized beam for converting thereof into a beam of orthogonal polarization, so as to form two beams of a substantially same polarization propagating in the same direction,
